(19) Europäisches Patentamt
European Patent Office
Office européen des brevets

(11) EP 2 859 026 B1

(12) **EUROPEAN PATENT SPECIFICATION**

(45) Date of publication and mention of the grant of the patent:
**28.06.2017 Bulletin 2017/26**

(21) Application number: **13725706.9**

(22) Date of filing: **30.05.2013**

(51) Int Cl.:
***C08F 110/08*** *(2006.01)* ***C08F 4/651*** *(2006.01)*

(86) International application number:
**PCT/EP2013/061158**

(87) International publication number:
**WO 2013/182474 (12.12.2013 Gazette 2013/50)**

(54) **CATALYST COMPONENTS FOR THE POLYMERIZATION OF BUTENE-1**

KATALYSATORKOMPONENTEN ZUR POLYMERISATION VON BUTEN-1

COMPOSANTS DE CATALYSEUR POUR LA POLYMÉRISATION DE BUTÈNE-1

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2012 EP 12171236**
**08.06.2012 US 201261657058 P**

(43) Date of publication of application:
**15.04.2015 Bulletin 2015/16**

(73) Proprietor: **Basell Poliolefine Italia S.r.l.**
**20127 Milano (IT)**

(72) Inventors:
- **MIGNOGNA, Alessandro**
  **44122 Ferrara (IT)**
- **ESPOSITO, Simona**
  **44122 Ferrara (IT)**
- **GUIDOTTI, Simona**
  **44122 Ferrara (IT)**
- **MORINI, Giampiero**
  **44122 Ferrara (IT)**
- **PATER, Joachim T. M.**
  **44122 Ferrara (IT)**
- **PIEMONTESI, Fabrizio**
  **44122 Ferrara (IT)**
- **VITALE, Gianni**
  **44122 Ferrara (IT)**

(74) Representative: **Giberti, Stefano**
**Basell Poliolefine Italia S.r.l.**
**Intellectual Property**
**P.le Privato Donegani 12**
**44122 Ferrara (IT)**

(56) References cited:
**US-A- 4 522 930** **US-A- 4 725 656**

- **DATABASE WPI Week 201351 Thomson Scientific, London, GB; AN 2012-J34051 XP002713462, -& KR 2012 0077684 A (HYOSUNG CORP) 10 July 2012 (2012-07-10)**

EP 2 859 026 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a process for preparing polybutene-1 with high activity and stereoregularity using a specific Ziegler-Natta catalyst component comprising a Mg dihalide based support on which are supported Ti atoms and at least an electron donor selected from a specific class.

Polybutene-1 (co)polymers (PB-1) are well known in the art. In view of their good properties in terms of pressure resistance, creep resistance, and impact strength they are mainly used in the manufacture of pipes to be used in the metal pipe replacement. In general, polybutene-1 (co)polymers can be prepared by polymerizing butene-1 in the presence of Ziegler-Natta based catalysts. However, not all the ZN catalysts are capable to produce polybutene-1 with the requested features in terms of activity, stereospecificity, molecular weight and molecular weight distribution in order to render it susceptible of industrial exploitation. Typically, a suitable catalyst for PB-1 industrial production comprises (A) a solid component comprising a Ti compound and a phthalate as an electron-donor compound supported on $MgCl_2$; (B) an alkylaluminum compound and, (C) an external electron-donor compound selected from alkylalkoxysilanes.

Polybutene-1 produced with this kind of catalyst is disclosed for example in EP-A-172961, WO99/45043 and WO03/099883.

Use of some phthalates however, has been recently addressed as involving potential toxicity problems and therefore intense research activities have been devoted to find alternative classes of donors capable of replacing phthalates in terms of both performances in polymerization and quality of the polymer product.

The problem of finding a proper replacement for phthalates in the PB-1 production has not an easy solution because the level of performances of the ZN catalysts in the polymerization of propylene is absolutely not predictable of the level of performances in butene-1 polymerization. In fact, several classes of diesters, for example those disclosed in US 7,388,061 and WO2010/078494, have demonstrated the possibility of giving good level performances in the propylene polymerization while they have surprisingly proved to be much inferior in the butene-1 polymerization thereby making fruitless any attempt of prediction on the basis of propylene polymerization data. For this reason, it was very surprising to discover that the diesters class of the present invention, was so effective in producing highly isotactic PB-1. This class was mentioned in a generic way in USP 4,725,656 as useful in the PP production without however reporting any concrete example. On the other hand USP 4,522,930, which does not describe generally the diester class of the present invention, reports the specific propylene polymerization test of a catalyst including, as electron donor, one member of the present class namely diisobutyl o-phenylene diacetate. The results in the polymerization of propylene were not particularly good as this donor gave very low activity and stereospecificity.

It is therefore an object of the present invention a process for the polymerization of butene-1 carried out in the presence of a catalyst comprising

(a) a solid catalyst component comprising Mg, Ti and an electron donor compound of the following formula (I)

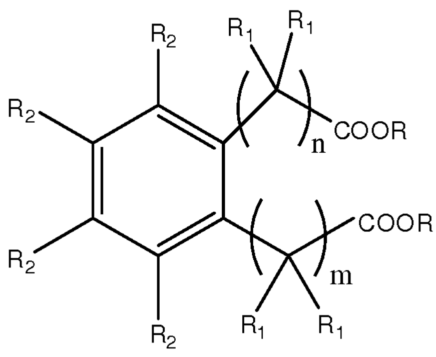

(I)

in which the R groups equal to or different from each other, are $C_1$-$C_{15}$ hydrocarbon groups, the $R_1$-$R_2$ groups, equal to or different from each other, are hydrogen, halogen or $C_1$-$C_{15}$ hydrocarbon groups, optionally containing an heteroatom selected from halogen, P, S, N and Si, n and m are integer from 0 to 3 with the proviso that at least one of them is different from 0;

(b) an aluminium alkyl cocatalyst and

(c) an external electron donor.

Preferably R groups are selected from $C_1$-$C_{10}$ hydrocarbon groups more preferably from $C_1$-$C_5$ alkyl groups, especially linear such as methyl, ethyl, or n-butyl. Preferably, R groups are chosen among linear $C_1$-$C_4$ alkyl groups and

especially from linear C1-C3 alkyl groups. Preferably, the sum of n+m is 2 and more preferably both n and m are 1.

In a preferred aspect of the present invention the groups $R_1$ and $R_2$ are selected from hydrogen and $C_1$-$C_5$ alkyl groups. Preferably, they are not simultaneously alkyl groups and more preferably they are hydrogen. Examples of structures (I) are the following:

butyl 2-(2-(2-ethoxy-2-oxoethyl)phenyl)acetate, butyl 2-(2-(2-isobutoxy-2-oxoethyl)phenyl)acetate, butyl 2-(2-(2-methoxy-2-oxoethyl)phenyl)acetate, butyl 2-(2-(2-oxo-2-propoxyethyl)phenyl)acetate, dibutyl 2,2'-(1,2-phenylene)diacetate, diethyl 2,2'-(1,2-phenylene)diacetate, diisobutyl 2,2'-(1,2-phenylene)diacetate, dimethyl 2,2'-(1,2-phenylene)diacetate, dipropyl 2,2'-(1,2-phenylene)diacetate, ethyl 2-(2-(2-isobutoxy-2-oxoethyl)phenyl)acetate, ethyl 2-(2-(2-methoxy-2-oxoethyl)phenyl)acetate, ethyl 2-(2-(2-oxo-2-propoxyethyl)phenyl)acetate, isobutyl 2-(2-(2-methoxy-2-oxoethyl)phenyl)acetate, isobutyl 2-(2-(2-oxo-2-propoxyethyl)phenyl)acetate, methyl 2-(2-(2-oxo-2-propoxyethyl)phenyl)acetate, diethyl 2,2'-(4-(1-phenylethyl)-1,2-phenylene)diacetate, diethyl 2,2'-(4-(2-phenylpropan-2-yl)-1,2-phenylene)diacetate, diethyl 2,2'-(4-(tert-butyl)-1,2-phenylene)diacetate, diethyl 2,2'-(4-butyl-1,2-phenylene)diacetate, diethyl 2,2'-(4-cyclohexyl-1,2-phenylene)diacetate, diethyl 2,2'-(4-cyclopentyl-1,2-phenylene)diacetate, diethyl 2,2'-(4-ethyl-1,2-phenylene)diacetate, diethyl 2,2'-(4-isobutyl-1,2-phenylene)diacetate, diethyl 2,2'-(4-isopropyl-1,2-phenylene)diacetate, diethyl 2,2'-(4-methyl-1,2-phenylene)diacetate, diethyl 2,2'-(4-propyl-1,2-phenylene)diacetate, diethyl 2,2'-(4-chloro-1,2-phenylene)diacetate, diethyl 2,2'-(1,2-phenylene)bis(3-methylbutanoate), diethyl 2,2'-(1,2-phenylene)dipropanoate, ethyl 2-(2-(1-ethoxy-1-oxopropan-2-yl)phenyl)-3-methylbutanoate, diethyl 2,2'-(3,4,5,6-tetramethyl-1,2-phenylene)diacetate, diethyl 2,2'-(3,5-di-tert-butyl-1,2-phenylene)diacetate, diethyl 2,2'-(3,5-diisopropyl-1,2-phenylene)diacetate, diethyl 2,2'-(3,5-dimethyl-1,2-phenylene)diacetate, diethyl 2,2'-(4,5-dimethyl-1,2-phenylene)diacetate, diethyl 2,2'-(5,5,8,8-tetramethyl-5,6,7,8-tetrahydronaphthalene-2,3-diyl)diacetate, diethyl 2,2'-(5-(tert-butyl)-3-methyl-1,2-phenylene)diacetate, diethyl 2,2'-(naphthalene-2,3-diyl)diacetate, butyl 2-(3-butoxy-3-oxopropyl)benzoate, ethyl 2-(3-ethoxy-3-oxopropyl)benzoate, isobutyl 2-(3-isobutoxy-3-oxopropyl)benzoate, methyl 2-(3-methoxy-3-oxopropyl)benzoate, ethyl 2-(2-(ethoxycarbonyl)-3,3-dimethylbutyl)benzoate, ethyl 2-(2-(ethoxycarbonyl)-3-methylbutyl)benzoate, ethyl 2-(2-(ethoxycarbonyl)-4-methylpentyl)benzoate, ethyl 2-(2-(ethoxycarbonyl)butyl)benzoate, ethyl 2-(2-(ethoxycarbonyl)hexyl)benzoate, ethyl 2-(3-ethoxy-2-methyl-3-oxopropyl)benzoate, ethyl 2-(1-(3,4-dichlorophenyl)-3-ethoxy-3-oxopropyl)benzoate, ethyl 2-(1-(3,4-dimethylphenyl)-3-ethoxy-3-oxopropyl)benzoate, ethyl 2-(1-ethoxy-1-oxoheptan-3-yl)benzoate, ethyl 2-(1-ethoxy-1-oxopentan-3-yl)benzoate, ethyl 2-(1-ethoxy-4,4-dimethyl-1-oxopentan-3-yl)benzoate, ethyl 2-(1-ethoxy-4-methyl-1-oxopentan-3-yl)benzoate, ethyl 2-(1-ethoxy-5-methyl-1-oxohexan-3-yl)benzoate, ethyl 2-(3-ethoxy-3-oxo-1-phenylpropyl)benzoate, ethyl 2-(4-ethoxy-4-oxobutan-2-yl)benzoate, ethyl 2-(3-ethoxy-3-oxopropyl)-5-ethylbenzoate, ethyl 2-(3-ethoxy-3-oxopropyl)-5-isobutylbenzoate, ethyl 2-(3-ethoxy-3-oxopropyl)-5-isopropylbenzoate, ethyl 2-(3-ethoxy-3-oxopropyl)-5-methylbenzoate, ethyl 5-(tert-butyl)-2-(3-ethoxy-3-oxopropyl)benzoate, ethyl 5-chloro-2-(3-ethoxy-3-oxopropyl)benzoate, ethyl 2-(3-ethoxy-3-oxopropyl)-4-isopropylbenzoate, ethyl 2-(3-ethoxy-3-oxopropyl)-4-methylbenzoate, ethyl 4-(tert-butyl)-2-(3-ethoxy-3-oxopropyl)benzoate, ethyl 4-chloro-2-(3-ethoxy-3-oxopropyl)benzoate, ethyl 2-(2-(ethoxycarbonyl)cyclohexyl)benzoate, ethyl 3-(3-ethoxy-3-oxopropyl)-2-naphthoate.

As explained above, the catalyst component (a) of the invention comprises, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{q-y}X_y$ can be used, where q is the valence of titanium, y is a number between 1 and q-1, X is halogen and R is a hydrocarbon radical having from 1 to 10 carbon atoms.

The preparation of the solid catalyst component can be carried out according to several methods.

According to one of these methods, the magnesium dichloride in an anhydrous state, the titanium compound and the electron donor compounds are milled together under conditions in which activation of the magnesium dichloride occurs. The so obtained product can be treated one or more times with an excess of $TiCl_4$ at a temperature between 80 and 135°C. This treatment is followed by washings with hydrocarbon solvents until chloride ions disappeared. According to a further method, the product obtained by co-milling the magnesium chloride in an anhydrous state, the titanium compound and the electron donor compounds are treated with halogenated hydrocarbons such as 1,2-dichloroethane, chlorobenzene, dichloromethane. The treatment is carried out for a time between 1 and 4 hours and at temperature of from 40°C to the boiling point of the halogenated hydrocarbon. Another method comprises the reaction

between magnesium alcoholates or chloroalcoholates (in particular chloroalcoholates prepared according to USP 4,220,554) and an excess of $TiCl_4$ in the presence of the electron donor compounds at a temperature of about 80 to 120°C.

According to a preferred method, the solid catalyst component can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2$•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0°C); the mixture is heated up to 80-135°C and kept at this temperature for 0.5-2 hours. The treatment with $TiCl_4$ can be carried out one or more times. The electron donor compounds can be added in the desired ratios during the treatment with $TiCl_4$. The preparation of catalyst components in spherical form are described for example in European Patent Applications EP-A-395083, EP-A-553805, EP-A-553806, EPA601525 and WO98/44009.

The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$, preferably between 0.2 and 0.6 $cm^3/g$. The porosity (Hg method) due to pores with radius up to 10.000Å generally ranges from 0.3 to 1.5 $cm^3/g$, preferably from 0.45 to 1 $cm^3/g$.

The solid catalyst component has an average particle size ranging from 5 to 120 $\mu$m and more preferably from 10 to 100 $\mu$m.

As mentioned, in any of these preparation methods the desired electron donor compounds can be added as such or, in an alternative way, can be obtained *in situ* by using an appropriate precursor capable of being transformed in the desired electron donor compound by means, for example, of known chemical reactions such as etherification, alkylation, esterification, transesterification. Regardless of the preparation method used, the final amount of the electron donor compound of formula (I) is such that its molar ratio with respect to the Ti atoms is from 0.01 to 3, preferably from 0.2 to 2, more preferably from 0.3-1.5.

The alkyl-Al compound (b) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums.

Suitable external electron-donor compounds (c) include silicon compounds, ethers, esters, amines, heterocyclic compounds and particularly 2,2,6,6-tetramethylpiperidine and ketones. Another class of preferred external donor compounds is that of silicon compounds of formula $(R_6)_a(R_7)_bSi(OR_8)_c$, where a and b are integers from 0 to 2, c is an integer from 1 to 4 and the sum (a+b+c) is 4; $R_6$, $R_7$, and $R_8$, are alkyl, cycloalkyl or aryl radicals with 1-18 carbon atoms optionally containing heteroatoms. Particularly preferred in the preparation of polybutene-1 are the silicon compounds in which, at least one of $R_6$ and $R_7$ is selected from branched alkyl or cycloalkyl groups with 3-10 carbon atoms and $R_8$ is a $C_1$-$C_{10}$ alkyl group, in particular methyl. Examples of such preferred silicon compounds are diisopropyldimethoxysilane, t-butyltrimethoxysilane and thexyltrimethoxysilane and dicyclopentyldimethoxysilane.

The electron donor compound (c) is used in such an amount to give a molar ratio between the organoaluminum compound and said electron donor compound (iii) of from 0.1 to 500, preferably from 1 to 300 and more preferably from 3 to 150.

The polymerization process can be carried out according to known techniques, for example solution or slurry polymerization using as solvent or diluent an inert hydrocarbon, or solution polymerization using for example the liquid butene-1 as a reaction medium. Moreover, it may also be possible to carry out the polymerization process in the gas-phase, operating in one or more fluidized or mechanically agitated bed reactors. The polymerization carried out in the liquid butene-1 as a reaction medium is highly preferred.

The polymerization is generally carried out at temperature of from 20 to 120°C, preferably from 40 to 90°C. In the bulk polymerization the operating pressure is generally between 0.1 and 6 MPa preferably between 1.0 and 4 MPa. The polymerization can be carried out in one or more reactors that can work under same or different reaction conditions such as concentration of molecular weight regulator, monomer concentration, temperature, pressure. Working in more than one reactor under different conditions can lead to the preparation of polybutenes with different average Molecular Weight in the two reactors and therefore with a broader MWD optionally of bimodal type. Moreover, working in more than one reactor under different conditions has the advantage that the various polymerization step can be properly modulated so as to properly tailoring the properties of the final polymer.

In addition in order to make the catalyst particularly suitable for the polymerization step, it is possible to prepolymerize said catalyst in a prepolymerization step. Said prepolymerization can be carried out in liquid, (slurry or solution) or in the gas-phase, at temperatures generally lower than 100°C, preferably between 20 and 70°C. The prepolymerization step is carried out with small quantities of monomers for the time which is necessary to obtain the polymer in amounts of between 0.5 and 2000g per g of solid catalyst component, preferably between 5 and 500 and, more preferably, between 10 and 100g per g of solid catalyst component. The monomer used in the prepolymerization can be butene-1 and/or another α-olefin having from 2 to 10 carbon atoms. Preferably, the prepolymerization is carried out with propylene. In this case it is particularly preferable to carry out the prepolymerization with monomer amounts and polymerization times necessary to obtain a polypropylene content of from 0.5 to 20%, preferably from 1 to 15% based on the weight of the final polybutene-1 product. Although reactor blends are preferable in terms of homogeneity of the polymer, good results can be obtained by blending the polybutene-1 of the invention with an amount of propylene homopolymer or copolymer ranging from 0.5 to 20% by weight of the resulting composition.

The polybutenes of the invention can be used as such in all the applications for which polybutenes are generally employed. However, as it is known to the experts in this field, and as it can be easily determined by routine tests, it is possible to add further polymer components, additives (such as stabilizers, antioxidants, anticorrosives, nucleating agents, processing aids) and both organic and inorganic fillers which can give specific properties to the products of the invention.

The following examples are given in order to better illustrate the invention without limiting it. As explained the catalyst shows very interesting performances in the polymerization of propylene but also in the polymerization of butene-1 being able to generate polybutene-1 in high yields and high stereospecificity.

The following examples are given in order to better illustrate the invention.

## CHARACTERIZATIONS

### Determination of Ti

The determination of Ti content in the solid catalyst component has been carried out via inductively coupled plasma emission spectroscopy on "I.C.P Spectrometer ARL Accuris".

The sample was prepared by analytically weighting, in a "fluxy" platinum crucible", 0.1÷0.3 grams of catalyst and 3 grams of lithium metaborate/tetraborate 1/1 mixture. The crucible is placed on a weak Bunsen flame for the burning step and then after addition of some drops of KI solution inserted in a special apparatus "Claisse Fluxy" for the complete burning. The residue is collected with a 5% v/v $HNO_3$ solution and then the titanium was analyzed via ICP at a wavelength of 368.52 nm.

### Determination of internal donor content

The determination of the content of internal donor in the solid catalytic compound was done through gas chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 0°C under continuous stirring, and the insoluble polymer was then filtered at 0°C. The filtrate was then evaporated in a nitrogen flow at 140°C to reach a constant weight. The content of said xylene-soluble fraction is expressed as a percentage of the original 2.5 grams and then, by difference, the X.I. %.

### Determination of Isotactic Index (mmmm %) by $^{13}C$ NMR

The measurement is carried out on the xylene insoluble fraction (obtained as described in the previous section "Determination of X.I.") by preparing a 8 %wt solution of the polymer in $C_2Cl_4D_2$ and recording the spectra at a temperature of 120°C with a Bruker AV-600 spectrometer equipped with cryoprobe, operating at 160.91 MHz in the Fourier transform mode at 120°C. Each spectrum was acquired with a 90° pulse, 15 seconds of delay between pulses and Composite Pulse Decoupling (CPD) to remove 1H-13C coupling. About 512 transients were stored in 64K data points using a spectral window of 9000 Hz.

The assignment of the pentad signals in the region of branch methylene carbons was made according to Carbon-13 NMR Spectral Assignment of Five Polyolefins Determined from the Chemical Shift Calculation and the Polymerization Mechanism, T. Asakura and others, Macromolecules 1991, 24 2334-2340.

The Isotactic Index of the polybutene is evaluated as the percentage of mmmm pentad in the xylene insoluble fraction and it was calculated by integrating all the pentad region of branch methylene carbons from 28.15 ppm to 26.4 ppm ($I_{tot}$), the mmmm peak at 27.7 ppm was used as internal reference. The mmmm peak ($I_{mmmm}$) was integrated by cutting the integral line at the minimum (about 27.5 ppm) of the spectrum line between the higher field mmmm side band due to 13C-13C coupling and the mmmr peak.

$$\text{mmmm}\ \% = 100\ (I_{mmmm})/(I_{tot})$$

**Determination of intrinsic viscosity (IV)**

A weighed amount of the sample was dissolved in tetrahydronaphthalene (THN) at 135°C controlled temperature. The flow time of this diluted solution is determined with a Sematech Cinevisco system equipped with an Ubbelhode modified capillary viscometer, which is thermostated at 135°C. Irganox 1010 was added as an antioxidant to minimize degradation phenomena of the molecular weight. The IV calculations were performed by using the Huggins' equation and assuming the Huggins' coefficient equal to 0.35. The flow times of solvents and solutions were corrected taking into account the contributions due to the kinetic energy. The solution concentrations were evaluated taking into account the change of THN volumes from room temperature to 135°C.

**Polymer crystallinity via Differential Scanning Calorimetry (DSC)**

The melting points of the polymers (Tm) were measured by Differential Scanning Calorimetry (D.S.C.) on a Perkin Elmer DSC-1 calorimeter, previously calibrated against indium melting points. The weight of the samples in every DSC crucible was kept at 6.0 ± 0.5 mg.

In order to obtain the melting point of Form II, the weighted sample was sealed into aluminium pans and heated to 180°C at 10°C/minute. The sample was kept at 180°C for 5 minutes to allow a complete melting of all the crystallites, then cooled to 20°C at 10°C/minute. After standing 2 minutes at 20°C, the sample was heated for the second time to 180°C at 10°C/min. In this second heating run, the peak temperature was taken as the melting temperature of Form II.

**EXAMPLES**

**Procedure for preparation of the spherical adduct**

An initial amount of microspheroidal $MgCl_2 \cdot 2.8C_2H_5OH$ was prepared according to the method described in Example 2 of WO98/44009, but operating on larger scale. The support adduct had a P50 of about 25 micron, and an ethanol content of about 56%wt.

**General procedure for the preparation of solid catalyst component**

Into a 500 ml four-necked round flask, purged with nitrogen, 250 ml of $TiCl_4$ were introduced at 0°C. While stirring, 10 g of spherical adduct prepared as described above were added. The flask was cooled to 0°C and the indicated internal electron donor compound was added, such to meet the indicated molar ratio Mg/ID. The temperature was raised to the indicated value and maintained for the indicated titanation time. Then stirring was discontinued, the solid product was allowed to settle and the supernatant liquid was siphoned off.

Fresh $TiCl_4$ was added in such an amount to reach the initial liquid level. Temperature was brought to the indicated temperature for the indicated time, and siphoning was repeated. Optionally, a third titanation step was applied. The obtained solid was washed six times with anhydrous hexane (6 x 100 ml) at 60°C and then dried under vacuum.

**Procedure for the bulk polymerization of butene-1**

In a 4 liter autoclave, purged with nitrogen flow at 70 °C for one hour, 12 ml of anhydrous hexane containing 3.5 mmol of triisobutylaluminum were introduced in nitrogen flow at 30 °C. Then, 1.35 kg of liquid butene-1 were fed, temperature was raised to 75°C, and hydrogen (amount as indicated in Table 2) was added. To start the polymerization, 50 ml of catalyst suspension in anhydrous hexane were injected, the suspension containing 3.5 mmol of triisobutylaluminum, 6 mg of solid catalyst component, and external donor of the type indicated in Table 2, in an amount such to meet the Mg/ED as indicated in the same table. The polymerization was carried out at 75°C for 2 hours. The poly-butene-1

polymer was collected by flashing off the residual butene-1 monomer. The polymer was dried under nitrogen overnight at 70°C. The specific polymerization conditions and results are listed in Table 2.

## Examples 1-4 and Comparative Examples C1 and C2

Solid catalyst components were prepared, using the general method described above. In the examples, titanation conditions were changed, as indicated in Table 1. In contrast to the others, the solid of Example 3 was washed two times with heptane at 90°C, followed by four washings with hexane at 60°C.

The obtained solids were dried as described above, and characterized using the methods described above. The results of this characterization is indicated in Table 1.

*Table 1.*

| | **Internal donor** | | **Titanations** | | | **Composition** | |
|---|---|---|---|---|---|---|---|
| | Type | Mg/ID | $1^{st}$ tit | $2^{nd}$ tit | $3^{rd}$ tit | Ti | ID |
| | | molar | T / t | T / t | T / t | wt% | wt% |
| Ex. 1 | DEPDA | 6 | 100°C / 2hr | 120°C / 1hr | - | 2.6 | 15.4 |
| Ex. 2 | DEPDA | 6 | 120°C / 2hr | 120°C / 1hr | - | 2.6 | 12.6 |
| Ex. 3 | DEPDA | 7 | 120°C / 1hr | 120°C / 0.5hr | 120°C / 0.5hr | 2.7 | 13.0 |
| Ex.4 | EEOB | 6 | 100°C / 2hr | 120°C / 1hr | | 3.3 | nd |
| C1 | TMPDB | 6 | 100°C / 2hr | 120°C / 1hr | - | 4.1 | 16.7 |
| C2 | PDBPB | 8 | 100°C / 2hr | 120°C / 1hr | - | 3.8 | 15.1 |

DEPDA diethyl 2,2'-(1,2-phenylene)diacetate
PDBPB pentane-2,4-diyl bis(4-propylbenzoate)
TMPDB 5-(tert-butyl)-3-methyl-1,2-phenylene dibenzoate
EEOB - ethyl 2-(3-ethoxy-3-oxopropyl)benzoate

## Examples 5-13 and Comparative Examples C3 and C4

The above exemplified solid catalyst components were used in the homopolymerization of 1-butene, using the general description given above. The conditions of the polymerization (amount of hydrogen and external donor, and type of external donor) were changed, according to the description in Table 2.

The obtained polymers were characterized using the general procedures given above. The results of these characterizations are given in Table 2.

Table 2.

| | Polymerization conditions | | | | Polymerization results | | | | |
|---|---|---|---|---|---|---|---|---|---|
| | Cat | ED | Al/ED | $H_2$ | Mileage | XI | mmmm | IV | Tm |
| | | | molar | mL | kg/g | wt% | % | dL/g | °C |
| Ex 5 | Ex 1 | T | 40 | 1000 | 15 | 98.5 | n.d. | 1.85 | 117.8 |
| Ex 6 | Ex 2 | T | 40 | 1000 | 20 | 98.2 | n.d. | 1.79 | 117.0 |
| Ex 7 | Ex 3 | T | 40 | 1000 | 32 | 98.4 | 97.2 | 1.82 | 117.6 |
| Ex 8 | Ex 3 | T | 80 | 1000 | 36 | 98.3 | 96.8 | 1.82 | 117.4 |
| Ex 9 | Ex 3 | T | 150 | 1000 | 39 | 96.0 | 94.9 | 1.83 | 116.2 |
| Ex 10 | Ex 3 | T | 40 | 8000 | 31 | 96.8 | 96.2 | 0.80 | 116.4 |
| Ex 11 | Ex 3 | T | 40 | 6000 | 35 | 97.6 | n.d. | 0.89 | 116.9 |
| Ex 12 | Ex 3 | T | 40 | 200 | 24 | 98.4 | n.d. | 2.83 | 117.3 |
| Ex.13 | Ex.4 | T | 40 | 1000 | 15 | 97.8 | 95.5 | 1.69 | 116.8 |

(continued)

| | Polymerization conditions | | | | Polymerization results | | | | |
|---|---|---|---|---|---|---|---|---|---|
| | Cat | ED | Al/ED | $H_2$ | Mileage | XI | mmmm | IV | Tm |
| | | | molar | mL | kg/g | wt% | % | dL/g | °C |
| C3 | C1 | T | 40 | 1000 | 26 | 93.5 | n.d. | 1.93 | 115.1 |
| C4 | C2 | T | 40 | 1000 | 22 | 90.9 | 94.1 | 1.76 | 112.5 |
| T thexyltrimethoxysilane<br>n.d. = not determined | | | | | | | | | |

**Claims**

1. A process for the polymerization of butene-1 carried out in the presence of a catalyst comprising

(a) a solid catalyst component comprising Mg, Ti and an electron donor compound of the following formula (I)

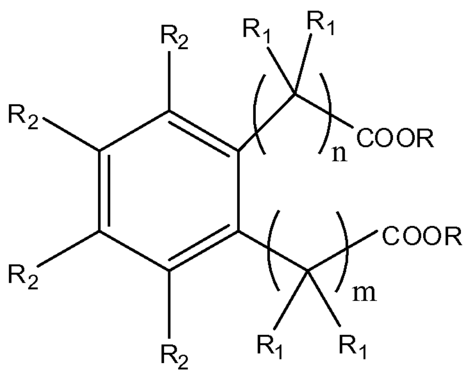

(I)

in which the R groups equal to or different from each other, are $C_1$-$C_{15}$ hydrocarbon groups, the $R_1$-$R_2$ groups, equal to or different from each other, are hydrogen, halogen or $C_1$-$C_{15}$ hydrocarbon groups, optionally containing an heteroatom selected from halogen, P, S, N and Si, n and m are integer from 0 to 3 with the proviso that at least one of them is different from 0;
(b) an aluminium alkyl cocatalyst and
(c) an external electron donor.

2. The process according to claim 1 in which R groups are selected from $C_1$-$C_5$ linear alkyl groups.

3. The process according to claim 1 in which the sum of n+m is 2.

4. The process according to claim 3 in which both n and m are 1.

5. The process according to claim 1 in which $R_1$ and $R_2$ are selected from hydrogen and $C_1$-$C_5$ alkyl groups.

6. The process according to claim 1 in which $R_1$ and $R_2$ are not simultaneously alkyl groups.

7. The process according to claim 6 in which $R_1$ and $R_2$ are hydrogen.

8. The process according to claim 1 in which the alkyl-A1 compound (b) is chosen among the trialkyl aluminum compounds.

9. The process according to claim 1 in which the external electron donor is selected silicon compounds of formula

$(R_6)_a(R_7)_bSi(OR_8)_c$, where a and b are integers from 0 to 2, c is an integer from 1 to 4 and the sum (a+b+c) is 4; $R_6$, $R_7$, and $R_8$, are alkyl, cycloalkyl or aryl radicals with 1-18 carbon atoms optionally containing heteroatoms.

**10.** The process according to claim 9 in which at least one of $R_6$ and $R_7$ is selected from branched alkyl or cycloalkyl groups with 3-10 carbon atoms and $R_8$ is a $C_1$-$C_{10}$ alkyl group.

**Patentansprüche**

**1.** Verfahren zur Polymerisation von Buten-1, das in Gegenwart eines Katalysators durchgeführt wird, der folgendes umfasst:

(a) eine feste Katalysatorkomponente, umfassend Mg, Ti und eine Elektronendonorverbindung mit der folgenden Formel (I):

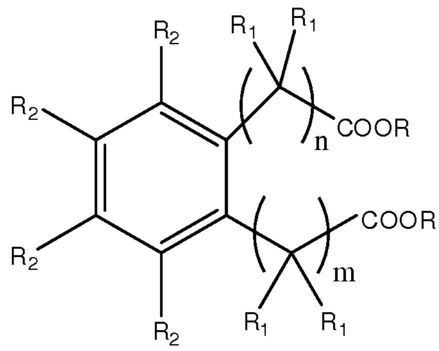

(I)

in der die R-Gruppen, die gleich oder voneinander verschieden sind, $C_1$-$C_{15}$-Kohlenwasserstoffgruppen sind, die $R_1$-$R_2$-Gruppen, die gleich oder voneinander verschieden sind, Wasserstoff, Halogen oder $C_1$-$C_{15}$-Kohlenwasserstoffgruppen sind, die gegebenenfalls ein Heteroatom ausgewählt aus Halogen, P, S, N und Si enthalten, n und m ganze Zahlen von 0 bis 3 sind, mit der Maßgabe, dass mindestens eine von ihnen von 0 verschieden ist;
(b) einen Aluminiumalkylcokatalysator und
(c) einen externen Elektronendonor.

**2.** Verfahren nach Anspruch 1, wobei die R-Gruppen ausgewählt sind aus linearen $C_1$-$C_5$-Alkylgruppen.

**3.** Verfahren nach Anspruch 1, wobei die Summe von n+m 2 ist.

**4.** Verfahren nach Anspruch 3, wobei sowohl n als auch m 1 sind.

**5.** Verfahren nach Anspruch 1, wobei $R_1$ und $R_2$ ausgewählt sind aus Wasserstoff und $C_1$-$C_5$-Alkylgruppen.

**6.** Verfahren nach Anspruch 1, wobei $R_1$ und $R_2$ nicht gleichzeitig Alkylgruppen sind.

**7.** Verfahren nach Anspruch 6, wobei $R_1$ und $R_2$ Wasserstoff sind.

**8.** Verfahren nach Anspruch 1, wobei die Alkyl-Al-Verbindung (b) ausgewählt ist aus Trialkylaluminiumverbindungen.

**9.** Verfahren nach Anspruch 1, wobei der externe Elektronendonor ausgewählt ist aus Siliciumverbindungen der Formel $(R_6)_a(R_7)_bSi(OR_8)_c$, wobei a und b ganze Zahlen von 0 bis 2 sind, c eine ganze Zahl von 1 bis 4 ist und die Summe (a+b+c) 4 beträgt; $R_6$, $R_7$ und $R_8$ Alkyl-, Cycloalkyl- oder Arylreste mit 1-18 Kohlenstoffatomen sind, die gegebenenfalls Heteroatome enthalten.

**10.** Verfahren nach Anspruch 9, wobei mindestens einer von $R_6$ und $R_7$ ausgewählt ist aus verzweigten Alkyl- oder Cycloalkylgruppen mit 3-10 Kohlenstoffatomen, und $R_8$ eine $C_1$-$C_{10}$-Alkylgruppe ist.

## Revendications

1. Procédé pour la polymérisation de butène-1 réalisé en présence d'un catalyseur comprenant

   (a) un constituant catalytique solide comprenant Mg, Ti et un composé donneur d'électrons de la formule (I) suivante

   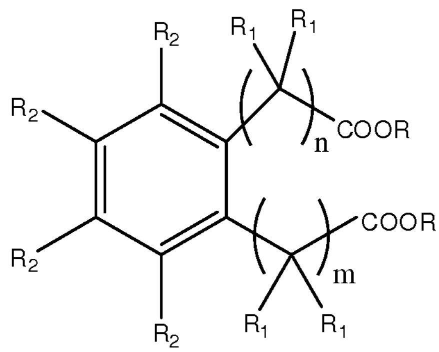

   (I)

   dans laquelle les groupes R, identiques ou différents les uns des autres, représentent des groupes hydrocarbonés en $C_1$-$C_{15}$, les groupes $R_1$-$R_2$, identiques ou différents les uns des autres, représentent hydrogène, halogène ou des groupes hydrocarbonés en $C_1$-$C_{15}$, contenant éventuellement un hétéroatome choisi parmi halogène, P, S, N et Si, n et m sont des entiers de 0 à 3, à condition qu'au moins l'un d'entre eux soit différent de 0;
   (b) un cocatalyseur d'alkylaluminium et
   (c) un donneur d'électrons externe.

2. Procédé selon la revendication 1, dans lequel les groupes R sont choisis parmi les groupes $C_1$-$C_5$-alkyle linéaire.

3. Procédé selon la revendication 1, dans lequel la somme de n+m vaut 2.

4. Procédé selon la revendication 3, dans lequel n et m représentent tous deux 1.

5. Procédé selon la revendication 1, dans lequel $R_1$ et $R_2$ sont choisis parmi hydrogène et des groupes $C_1$-$C_5$-alkyle.

6. Procédé selon la revendication 1, dans lequel $R_1$ et $R_2$ ne représentent pas simultanément des groupes alkyle.

7. Procédé selon la revendication 6, dans lequel $R_1$ et $R_2$ représentent hydrogène.

8. Procédé selon la revendication 1, dans lequel le composé d'alkyl-Al (b) est choisi parmi les composés de trialkylaluminium.

9. Procédé selon la revendication 1, dans lequel le composé donneur d'électrons externe est choisi parmi les composés de silicium de formule $(R_6)_a(R_7)_bSi(OR_8)_c$, où a et b sont des entiers de 0 à 2, c est un entier de 1 à 4 et la somme (a+b+c) vaut 4 ; $R_6$, $R_7$ et $R_8$ représentent des radicaux alkyle, cycloalkyle ou aryle comprenant 1-18 atomes de carbone, contenant éventuellement des hétéroatomes.

10. Procédé selon la revendication 9, dans lequel au moins l'un parmi $R_6$ et $R_7$ est choisi parmi les groupes alkyle ramifié ou cycloalkyle, comprenant 3-10 atomes de carbone et $R_8$ représente un groupe $C_1$-$C_{10}$-alkyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 172961 A
- WO 9945043 A
- WO 03099883 A
- US 7388061 B
- WO 2010078494 A
- US 4725656 A
- US 4522930 A
- US 4298718 A
- US 4495338 A
- US 4220554 A
- US 4399054 A
- US 4469648 A
- EP 395083 A
- EP 553805 A
- EP 553806 A
- EP 601525 A
- WO 9844009 A


### Non-patent literature cited in the description


- **T. ASAKURA.** Carbon-13 NMR Spectral Assignment of Five Polyolefins Determined from the Chemical Shift Calculation and the Polymerization Mechanism. *Macromolecules,* 1991, vol. 24, 2334-2340